# EUROPÄISCHE PATENTSCHRIFT

(11) **EP 3 068 645 B1**
(45) Veröffentlichungstag und Bekanntmachung des Hinweises auf die Patenterteilung: **20.03.2019**
(21) Anmeldenummer: 14806174.0
(22) Anmeldetag: 12.11.2014
(51) Int. Cl.: B60H 1/00, F21V 23/04, H05B 37/02, B60H 1/34

(54) **KRAFTFAHRZEUG-KLIMATISIERUNG MIT ADAPTIVEM LUFTAUSSTRÖMER**
MOTOR VEHICLE AIR-CONDITIONING SYSTEM WITH AN ADAPTIVE AIR VENT
CLIMATISATION DE VÉHICULE AUTOMOBILE AVEC AÉRATEUR ADAPTATIF

(30) Priorität: 15.11.2013 DE 102013019197
(43) Veröffentlichungstag der Anmeldung: 21.09.2016
(73) Patentinhaber: Audi AG, 85045 Ingolstadt (DE)
(72) Erfinder: WALL, Christian, 85122 Hitzhofen (DE)
(86) Internationale Anmeldenummer: PCT/EP2014/003027
(87) Internationale Veröffentlichungsnummer: WO 2015/070978

(56) Entgegenhaltungen:
- DE-A1-102010 018 105
- US-A1- 2005 025 345

## Beschreibung

Die Erfindung betrifft ein Verfahren zum Steuern einer Klimatisierungseinrichtung in einem Kraftfahrzeug. Die Klimatisierungseinrichtung ist dabei dahingehend in besonderer Weise ausgestaltet, dass eine Luftauslassöffnung, durch welche ein Luftstrom in einen Fahrzeuginnenraum des Kraftfahrzeugs eingeblasen wird, an einer Unterseite eines Bedienelements angeordnet ist, mittels welchem ein Benutzer zumindest ein Gerät des Kraftfahrzeugs bedienen kann. Insbesondere handelt es sich bei dem Bedienelement um einen Touchscreen, der an einem Armaturenbrett des Kraftfahrzeugs angeordnet ist.

Bei der Positionierung eines Touchscreens in einem Kraftfahrzeug muss ein Kompromiss bezüglich Ablesbarkeit und Erreichbarkeit gefunden werden. Der Touchscreen muss hoch genug angeordnet werden, um vom Fahrer während einer Fahrt den Anzeigeinhalt mit einer nur geringfügigen Blickabwendung vom Verkehrsgeschehen betrachten zu können. Andererseits muss der Touchscreen zum Ausführen einer Bedienhandlung auch einfach mit der Hand erreichbar sein, das heißt er darf nicht zu hoch oder zu weit vom Fahrer entfernt angeordnet sein. Eine ideale Position ist in der Regel diejenige Stelle, an welcher die Mann-Anströmer oder Klimaauslässe im Armaturenbrett angeordnet sind. Die Klimaauslässe weisen eine Auslassöffnung auf, durch welche die Klimatisierungseinrichtung des Kraftfahrzeugs einen Luftstrom in den Fahrzeuginnenraum des Kraftfahrzeugs einbläst. Mit anderen Worten konkurrieren bei der Konstruktion eines Kraftfahrzeugs der Touchscreen und die mittig im Kraftfährzeug vorgesehenen Mann-Anströmer um den selben Bauraum. Üblicherweise befinden sich die Mann-Anströmer über oder seitlich neben dem Touchscreen. Befinden sich die Mann-Anströmer seitlich des Touchscreens, so wird die Breite des Touchscreens beschränkt. Befinden sich die Mann-Anströmer über dem Touchscreen, so wird die Einbauhöhe des Touchscreens beschränkt.

Die dritte Lösung, nämlich das Anordnen des Touchscreens über den Mann-Anströmern, wird dagegen heutzutage vermieden, da während des Bedienens des Touchscreens die Hand des Benutzers zwangsläufig von dem aus der Luftauslassöffnung austretenden Luftstrom unangenehm angeströmt wird. Dieses Problem liegt generell bei dem Entwurf eines Kraftfahrzeugs immer dann vor, wenn ein Bedienelement, wie zum Beispiel ein Touchscreen, oberhalb einer Luftauslassöffnung einer Klimatisierungseinrichtung angeordnet werden muss.

Aus der DE 10 2008 018 397 A1 ist ein Verfahren zur Regelung einer Klimatisierung eines Innenraums eines Kraftfahrzeugs bekannt. Danach wird eine Zustandsinformation eines Körperteils eines Fahrzeuginsassen des Kraftfahrzeugs ermittelt und ein Luftaustritt der Klimatisierung in Abhängigkeit eines einzuhaltenden Komfortkriteriums und der erfassten Zustandsinformation des Körperteils eingestellt. Hierdurch wird vermieden, dass der eingeblasene Luftstrom dem Fahrzeuginsassen unangenehm ins Gesicht geblasen wird.

Aus der DE 10 2010 018 140 A1 ist eine Temperatureinstellvorrichtung für ein Kraftfahrzeug beschrieben, welche ein integriertes Display aufweist. Auch aus der DE 10 2006 009 303 A1 ist ein Verfahren zur Klimatisierung eines Kraftfahrzeugs bekannt, bei welchem der Insasse keine direkte Anströmung erfährt.

Aus der DE 10 2012 003 311 A1 ist ein Kraftfahrzeug bekannt, bei welchem mindestens ein Parameter einer Sitzposition eingelesen wird und eine Belüftungstemperatur und/oder eine Luftverteilung in dem Kraftfahrzeug in Abhängigkeit dieses Parameters steuerbar ist.

Die DE 10 2010 018 105 A1 beschreibt ein Verfahren gemäß Oberbegriff des Anspruchs 1.

Der Erfindung liegt die Aufgabe zugrunde, in einem Kraftfahrzeug ein Bedienelement und eine Luftauslassöffnung einer Klimatisierungseinrichtung übereinander anzuordnen.

Die Aufgabe wird durch die Gegenstände der unabhängigen Patentansprüche gelöst. Vorteilhafte Weiterbildungen der Erfindung sind durch den Merkmale der abhängigen Patentansprüche gegeben.

Mittels des erfindungsgemäßen Verfahrens ist es ermöglicht, eine Luftauslassöffnung oder mehrere Luftauslassöffnungen einer Klimatisierungseinrichtung an einer Unterseite eines Bedienelements anzuordnen. Hierdurch kann das Bedienelement zu den Seiten hin und nach oben hin beliebig ausgestaltet werden, ohne dass die zumindest eine Luftauslassöffnung im Weg ist. Das Bedienelement selbst muss nicht unbedingt etwas mit der Klimatisierungseinrichtung zu tun haben. Es kann sich um ein Bedienelement handeln, das zum Bedienen zumindest eines anderen Geräts des Kraftfahrzeugs ausgelegt ist. Insbesondere kann es sich um den beschriebenen Touchscreen handeln, mittels welchem beispielsweise ein Infotainmentsystem des Kraftfahrzeugs bedient werden kann. Im Zusammenhang mit der Erfindung ist unter einem Touchscreen ein berührungssensitiver Bildschirm zu verstehen, also ein Bildschirm, der an seiner Anzeigefläche eine Sensormatrix aufweist, mittels welcher eine Berührung oder eine Annäherung oder ein Druck eines Fingers ortsabhängig erkannt wird.

Um bei der Bedienung des Bedienelements den beschriebenen Nachteil zu vermeiden, dass sich die bedienende Hand im Luftstrom befindet, ist bei dem erfindungsgemäßen Verfahren vorgesehen, dass eine Detektionseinrichtung durch ein Detektionssignal signalisiert, falls die Hand zum Betätigen des Bedienelements auf das Bedienelement zubewegt wird und/oder falls das Bedienelement betätigt wird. Wird durch die Detektionseinrichtung das Detektionssignal erzeugt, so wird durch Klimatisierungseinrichtung der aus der zumindest einen Luftauslassöffnung austretende Luftstrom verringert und/oder z.B. zu einer Fahrzeugsseite oder nach unten hin umgelenkt. Das Verringern des Luftstroms kann zum einen ein Abschwächen des Luftstroms und zum anderen auch ein vollständiges Unterbrechen des Luftstroms bewirken. Mit anderen Worten wird durch das Verringern des Luftstroms die pro Zeiteinheit durch die zumindest eine Luftauslassöffnung geförderte Luftmenge verringert. Zum Verringern des Luftstroms kann z.B. ein Gebläse, welches den Luftstrom antreibt oder fördert, in der Drehzahl reduziert werden oder während des Bedienvorgangs abgeschaltet werden. Das Umlenken kann beispielsweise durch motorisch verschwenkbar ausgestaltete Lamellen in der zumindest einen Luftauslassöffnung realisiert werden.

Die Erfindung weist den Vorteil auf, dass eine anströmungsfreie Bedienung des Bedienelements durch eine Hand ermöglicht ist und dabei dennoch neue Gestaltungsmöglichkeiten im Interieur des Kraftfahrzeugs durch die Anordnung des Bedienelements oberhalb einer Luftauslassöffnung ermöglicht sind. Bei der Detektionseinrichtung kann es sich um eine signalverarbeitende Recheneinrichtung, z.B. eine Steuergerät oder einen Mikrocontroller, sowie eine vorgeschaltete geeignete Sensorik handeln. Die Sensorik erfasst oder sensiert dabei eine Annäherung der Hand an das Bedienelement und/oder den Bedienvorgang selbst. Gemäß einer Weiterbildung der Erfindung erzeugt die Detektionseinrichtung das Detektionssignal in Abhängigkeit von einem Bediensignal des Bedienelements selbst. Handelt es sich bei dem Bedienelement beispielsweise um einen Drucktaster, so kann beim Betätigen des Drucktasters dessen Schaltsignal nicht nur zum Steuern des zugeordneten Geräts des Kraftfahrzeugs sonder auch als Detektionssignal für die Klimatisierungseinrichtung genutzt werden. Im Falle eines Touchscreens kann entsprechend die Touch-Sensorik, also die beschriebene Sensormatrix, genutzt werden, um das Bediensignal zu erzeugen. Die Verwendung des Bediensignals des Bedienelements selbst weist den Vorteil auf, dass ohne eine zusätzliche Sensorik sehr robust erkannt werden kann, wann ein Bedarf für das Verringern und/oder Umlenken des Luftstroms besteht.

Eine andere Weiterbildung der Erfindung sieht vor, dass die Detektionseinrichtung das Detektionssignal in Abhängigkeit von einer von dem Bedienelement verschiedenen zusätzlichen Sensorik erzeugt. Hierbei handelt es sich bevorzugt um eine Sensorik, die auch für andere Funktionalitäten des Kraftfahrzeugs bereitgestellt ist, so dass ebenfalls keine zusätzliche Sensorik verbaut werden muss. So ist es gemäß einer Weiterbildung vorgesehen, dass die zusätzliche Sensorik zumindest einen der folgenden Sensoren umfasst: eine Videokamera, eine Infrarotkamera, eine Time-of-Flight-Kamera (ToF-Kamera), einen kapazitiven Sensor. Diese Sensoren weisen den Vorteil auf, dass bereits ein Annähern der Hand an das Bedienelement berührungslos erfasst werden kann. Die beschriebenen Kameras können beispielsweise durch eine Gestenerkennungseinrichtung des Kraftfahrzeugs oder eine Fahrermüdigkeitserkennung bereitgestellt sein. Ihre Signale können auch einer Steuereinrichtung der Klimatisierungseinrichtung zugeführt werden, um den Luftstrom in Abhängigkeit von den Kamerasignalen zu steuern.

Erfindungsgemäß erzeugt die Detektionseinrichtung das Detektionssignal in Abhängigkeit von einem Erkennungssignal einer Gestenerkennungseinrichtung. Hierdurch ist es möglich, zusätzlich zu überprüfen, ob die Hand eine vorbestimmte Haltung aufweist und eine extrapolierte Bewegungstrajektorie der Hand auf das Bedienelement ausgerichtet ist. Durch Überwachen der Handhaltung und Erkennen einer bestimmten Handform, z.B. eines zum Berühren des Bedienelements ausgestreckten Zeigefingers, kann besonders zuverlässig erkannt werden, ob der Benutzer tatsächlich einen Bedienwunsch hat, also das Bedienen des Bedienelements tatsächlich plant. Zum Erkennen einer Handform kann beispielsweise die Funktionsbibliothek "Kinect" des Unternehmens Microsoft verwendet werden. Durch Extrapolieren einer Bewegungstrajektorie ergibt sich der Vorteil, dass schon sehr frühzeitig erkannt werden kann, ob der Benutzer tatsächlich das Bedienelement mit der Hand anstrebt. Hierdurch kann der Luftstrom bereits dann verringert und/oder umgelenkt sein, wenn von unten her die Hand eine Luftauslassöffnung passiert.

Um möglichst wenig Fehlerkennungen zu erhalten, sieht eine Weiterbildung der Erfindung vor, dass die Detektionseinrichtung das Detektionssignal in Abhängigkeit von Sensorsignalen mehrerer Sensoren erzeugt. Zu jedem Sensorsignal wird dabei bevorzugt ein Wahrscheinlichkeitswert ermittelt, dass eine Bedienung des Bedienelements bevorsteht. Hierdurch können auch Sensorsignale genutzt werden, die zwar ein Indiz für eine bevorstehende Bedienung des Bedienelements darstellen, aber nicht eindeutig sind. Welcher Wahrscheinlichkeitswert angemessen ist, kann in einfachen Versuchen durch Beobachten von Versuchspersonen ermittelt werden. Der Wahrscheinlichkeitswert gibt also an, dass eine Bedienung des Bedienelements bevorsteht. Aus den Wahrscheinlichkeitswerten aller ausgewerteten Sensorsignalen wird dann eine Gesamtwahrscheinlichkeit gebildet und das Detektionssignal nur erzeugt, falls der Gesamtwahrscheinlichkeitswert ein vorbestimmtes Auslösekriterium erfüllt, also die Gesamtwahrscheinlichkeit beispielsweise über einem vorbestimmten Schwellenwert liegt, wie beispielsweise 70% oder 80%.

Das Verringern und/oder Umlenken des Luftstroms ist aber nicht immer sinnvoll. Beispielsweise kann an einer Luftauslassöffnung selbst ein Drehrad oder eine andere Einstellvorrichtung der Klimatisierungsvorrichtung selbst angeordnet sein, die zum Einstellen des Luftstroms vorgesehen ist. Hierbei können beispielsweise mechanisch verstellbare Umlenkflügel vorhanden sein oder das genannte Drehrad zum Verändern des durchströmten Querschnitts der Luftauslassöffnung. Wenn der Benutzer nun zu dieser Einstellvorrichtung greift, um den Luftstrom einzustellen, macht es keinen Sinn, den Luftstrom zu verringern oder von der Hand wegzuleiten. Dann ist das Einstellen für den Benutzer mittels der Einstellvorrichtung nicht mehr möglich. Deshalb sieht eine Weiterbildung der Erfindung vor, dass während eines zum Einstellen des Luftstroms vorgesehene Einstellvorrichtung der Klimatisierungseinrichtung bedient wird, der Luftstrom nur in Abhängigkeit von der Bedienung der Einstellvorrichtung eingestellt wird und eben unabhängig von der Position der Hand und einer Bedienung des Bedienelements. Mit anderen Worten wird der Luftstrom Während des Einstellen des Luftstroms mittels der Einstellvorrichtung also unabhängig von einer Position der Hand und einer Bedienung des Bedienelements eingestellt. Hierdurch ergibt sich der Vorteil, dass der Benutzer während des Einstellens genau denjenigen Luftstrom spürt, der auch nach Entfernen der Hand von der Klimatisierungseinrichtung weiter erzeugt wird. Um dieses Problem der Unterscheidung einerseits einer bevorstehenden Bedienung des Bedienelements für ein Gerät des Kraftfahrzeugs und andererseits der bevorstehenden Bedienung der Einstellvorrichtung der Klimatisierungseinrichtung möglichst einfach zu lösen, sieht eine Weiterbildung der Erfindung vor, dass das Detektionssignal nur erzeugt wird, falls sich die Hand oberhalb einer bestimmten Mindesthöhe befindet, wobei sich die Luftaustrittsöffnung unter der Mindesthöhe befindet. Mit anderen Worten muss der Benutzer also seine Hand zunächst über die Mindesthöhe hinwegheben, bevor durch das Detektionssignal signalisiert wird, dass eine Betätigung des Bedienelements bevorsteht. Dieses höhenabhängige Auslösen kann besonders zuverlässig mittels der bereits beschriebenen ToF-Kamera realisiert werden. Auch kapazitive Sensoren an oder in dem Bedienelement oder zwischen dem Bedienelement und der zumindest einen Luftauslassöffnung ermöglichen es, eine über die Mindesthöhe erhobene Hand zuverlässig zu erkennen.

Eine andere Weiterbildung der Erfindung sieht vor, dass das Bedienelement ein Touchscreen ist und hierbei die Klimatisierungseinrichtung den Luftstrom nicht pauschal überall im Bereich der zumindest einen Luftauslassöffnung verändert. Die Klimatisierungseinrichtung verändern den Luftstrom in Abhängigkeit von einem Berührungsort eines Fingers der Hand auf dem Touchscreen nur so weit, dass ein unterhalb des Berührungsortes strömender Anteil des Luftstroms verringert wird und ein übriger Anteil des Luftstroms unverändert bleibt. Hierdurch kann beispielsweise erreicht werden, dass nur derjenige Anteil des Luftstroms verringert wird, in welchem sich tatsächlich eine Hand befindet, während der übrige Anteil des Luftstroms, welcher an der Hand ungehindert vorbeiströmen kann, auch unverändert aufrechterhalten bleibt.

Zu der Erfindung gehört auch ein Kraftfahrzeug, mittels welchem das beschriebene erfindungsgemäße Verfahren durchgeführt werden kann. Das Kraftfahrzeug ist dabei bevorzugt als Kraftwagen, insbesondere als Personenkraftwagen, ausgestaltet, wobei das Kraftfahrzeug ein zum Bedienen zumindest eines Gerätes ausgelegtes Bedienelement sowie eine Klimatisierungseinrichtung aufweist. Eine Luftauslassöffnung zum Einblasen von Luft in einen Fahrzeuginnenraum des Kraftfahrzeugs ist in der beschriebenen Weise an einer Unterseite des Bedienelements angeordnet. Das Kraftfahrzeug weist die beschriebene Detektionseinrichtung zum Überwachen eines Bedienwunsches des Benutzers und zum Erzeugen eines Detektionssignals auf. Die Klimatisierungseinrichtung ist bei dem erfindungsgemäßen Kraftfahrzeug dazu ausgelegt, den Luftstrom in Abhängigkeit von dem Detektionssignal zu verringern und/oder umzulenken.

Bei dem erfindungsgemäßen Kraftfahrzeug ist das beschriebene Bedienelement bevorzugt ein Touchscreen, der insbesondere an einem Armaturenbrett des Kraftfahrzeugs angeordnet sein kann.

Zu der Erfindung gehören auch Weiterbildungen des erfindungsgemäßen Kraftfahrzeugs, die Merkmale aufweisen, die bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

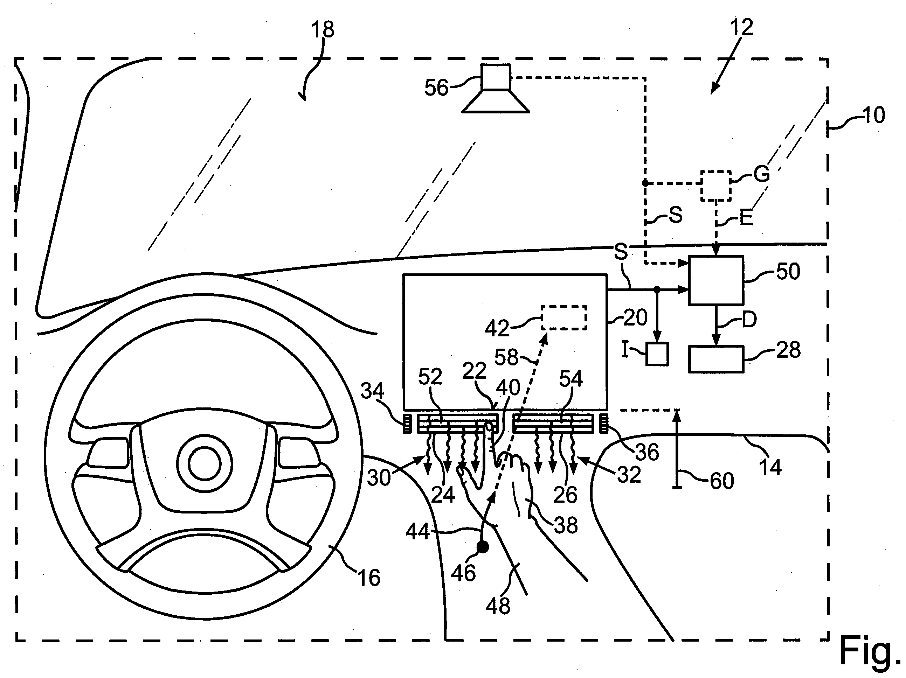

Im Folgenden ist ein Ausführungsbeispiel der Erfindung beschrieben. Hierzu zeigt die einzige Fig. eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Fig. ist von einem Kraftfahrzeug 10 ein Fahrzeuginnenraum 12 dargestellt. Gezeigt sind ein Armaturenbrett 14, ein Lenkrad 16 und eine Windschutzscheibe 18. Das Armaturenbrett 14 kann beispielsweise fahrzeugmittig angeordnet ein Bedienelement 20 aufweisen, bei dem es sich beispielweise um einen Touchscreen handeln kann. Mittels des Bedienelements 20 kann beispielsweise ein Infotainmentsystem I des Kraftfahrzeugs bedient werden. An einer Unterseite 22 des Bedienelements 20 können Luftauslassöffnungen 24, 26 angeordnet sein, durch welche eine Klimaanlage 28 jeweils einen Luftstrom 30, 32 in den Fahrzeuginnenraum 12 bläst oder fördert. Ein Abstand zwischen der Unterseite 22 und den Luftauslassöffnungen 24, 26 kann beispielsweise weniger als 15 cm, insbesondere weniger als 10 cm, ganz besonders weniger als 5 cm betragen.

Seitlich neben den Luftauslassöffnungen 24, 26 kann jeweils eine Einstellvorrichtung 34, 36, beispielsweise mit einem Drehrad, vorgesehen sein, mittels welcher eine Bedienperson den jeweiligen Luftstrom 30 ,32 in bekannter Weise manuell regulieren kann. Die Luftauslässe 24, 26, die Klimaanlage 28 und die Einstellvorrichtungen 34, 36 bilden zusammen eine Klimatisierungseinrichtung im Sinne der Erfindung.

In dem gezeigten Beispiel möchte ein Fahrer mit seiner Hand 38 auf dem Touchscreen 20 eine Bedienhandlung vornehmen, um beispielsweise das Infotainmentsystem I zu bedienen. Hierzu möchte er mit dem ausgestreckten Zeigefinger 40 auf den Touchscreen 20 z.B. ein graphisches Objekt 22 antippen, bei dem es sich beispielsweise um ein Bedienfeld (Button) oder einen Menüeintrag handeln kann. Der Fahrer bewegt hierzu die Hand 38 entlang einer Bewegungstrajektorie 44 beispielsweise aus einer Ruhelage 46 heraus in Richtung auf den Touchscreen 20 zu. Hierbei muss er die Hand 38 durch einen oder beide der Luftströme 30, 32 bewegen. Auch während des Bedienens des Touchscreens 20, also während des beispielsweise des Antippens des Objekts 42 und weiterer auf dem Touchscreen 20 dargestellter graphischer Objekte, hält der Fahrer seine Hand 38 oder seinen Unterarm 48 im Bereich der Luftströme 30, 32.

Bei dem Kraftfahrzeug 10 ist dabei aber sichergestellt, dass während des Bedienvorgangs die Hand 38 und der Arm 48 nicht in als unangenehm empfundener Weise durch einen heißen oder kalten Luftstrom 30, 32 angeblasen werden. Hierzu ist in dem Kraftfahrzeug 10 eine Detektionseinrichtung 50 bereitgestellt, die beispielsweise ein Programmmodul des Infotainmentsystems I oder einer innerzentralen Recheneinrichtung oder eines Steuergeräts umfassen kann. Die Detektionseinrichtung 50 sensiert die Annäherung der Hand 38 an den Touchscreen und signalisiert eine erkannte Annäherung und/oder eine bereits erfolgte Bedienung des Touchscreens 20 durch ein Detektionssignal D an die Klimaanlage 28.

Die Klimaanlage 28 kann dann in Abhängigkeit von dem Detektionssignal D beispielsweise ein (nicht dargestelltes) Gebläse der Klimaanlage 28 in der Drehzahl reduzieren oder abschalten. Das Gebläse ist dabei dasjenige, was zumindest einen der Luftströme 30, 32 antreibt. Zusätzlich oder alternativ dazu kann auch vorgesehen sein, dass in Abhängigkeit von dem Detektionssignal D in den Luftauslassöffnungen 24, 26 angeordnete Lamellen 52, 54 motorisch verstellt werden, so dass die Luftströme 30 und/oder 32 umgelenkt werden und hierdurch an der Hand 38 und dem Arm 48 vorbeigeführt sind. Durch alleiniges Umlenken der Luftströme 30, 32 ergibt sich der zusätzliche Vorteil, dass die insgesamt in den Fahrzeuginnenraum 12 geförderte Luftmenge pro Zeiteinheit unverändert bleibt und hierdurch die Klimatisierungsleistung nicht beeinträchtigt ist.

Zum Erkennen der Annäherung der Hand 38 an den Touchscreen 20 kann beispielsweise ein Signal S einer Kamera 56 des Kraftfahrzeugs 10 von der Detektionseinrichtung 50 empfangen werden und anhand des Kamerasignals die Hand 38 im Fahrzeuginnenraum 12 erkannt werden. Es kann beispielsweise vorgesehen sein, dass die Bewegungstrajektorie 44 z.B. eines geometrischen Schwerpunkts der Hand 38 anhand des Kamerasignals S erkannt wird und die Bewegungstrajektorie 44 mittels einer Extrapolation 58 verlängert wird und hierdurch überprüft wird, ob sich die Hand 38 auf das Bedienelement 20 zu bewegt. Dies wird von der Detektionseinrichtung 50 dann als Bedienabsicht des Fahrers erkannt und das Detektionssignal D erzeugt.

Es kann auch vorgesehen sein, dass als ein weiteres Sensorsignal S ein Bediensignal des Bedienelements 20 selbst von der Detektionseinrichtung 50 ausgewertet wird und also während des Bedienens des Bedienelements 20, also beispielsweise während des Drückens des Objekts 42, das Detektionssignal D erzeugt wird.

Bei der Kamera 56 kann es sich auch um eine ToF-Kamera, beispielsweise eine PMD-Kamera (PMD - Photonic Mixing Device) handeln. Hierdurch kann beispielsweise auch eine Höheninformation betreffend die Lage der Hand 38 im Fahrzeuginnenraum 12 ausgewertet werden. Es kann vorgesehen sein, dass das Detektionssignal D solange nicht erzeugt wird, wie sich die Hand 38 unterhalb einer vorbestimmten Mindesthöhe 60 unterhalb der Unterseite 22 befindet. Hierdurch ist es dem Fahrer dann möglich, die Einstellvorrichtungen 34, 36 zu bedienen, ohne dass durch das Annähern der Hand 38 an die Einstellvorrichtungen 34, 36 ebenfalls die Luftströme 30, 32 schon aufgrund eines ungewollt erzeugten Detektionssignals verändert werden.

In dem gezeigten Beispiel befindet sich das graphische Objekt auf einer rechten Seite oberhalb der Luftauslassöffnung 26. Es kann vorgesehen sein, dass die Detektionseinrichtung 50 durch das Signal D signalisiert, dass lediglich der Luftstrom 32 unterhalb des graphischen Objekts 52 reduziert und/oder umgelenkt werden soll. Mit anderen Worten bleibt bei dieser Ausführungsform der linke Luftstrom 30 unverändert, während der Fahrer mit der Hand 38 auf dem Touchscreen mit seinem Finger 40 das graphische Objekt 42 auf der rechten Hälfte des Touchscreens 20 antippt. Auch hierbei spürt der Fahrer dann keinen unangenehmen Luftstrom, da der Luftstrom 30 weder auf seine Hand 38 noch auf seinen Arm 48 gerichtet ist.

Eine besonders frühe Erkennung der Bedienabsicht ist auch möglich, wenn die Detektionseirnichtung 50 anhand der Handstellung der Hand 38 überprüft, ob der Fahrer das Bedienen des Touchscreens 20 beabsichtigt. Hierzu kann beispielsweise überprüft werden, ob der Zeigefinger 40 zum Bedienen ausgestreckt ist und nur für diesen Fall dann das Detektionssignal D erzeugt werden. Hierzu kann das Kraftfahrzeug 10 eine Gestenerkennungseinrichtung G aufweisen, welche überprüft, ob die Hand eine vorbestimmte Geste oder Handstellung aufweist. Wird erkannt, dass die Hand 38 die Handstellung aufweist, wird dies durch die Gestenerkennungseinrichtung G durch ein Erkennungssignal E der Detektionseinrichtung 50 signalisiert. Die Gestenerkennungseinrichtung G kann beispielsweise ein Programmmodul einer zentralen Recheneinrichtung, des Infotainmentsystems I oder des Steuergeräts des Kraftfahrzeugs 10 sein.

Insgesamt ist also durch das Beispiel gezeigt, wie bei einem Kraftfahrzeug eine Klimasteuerung in Abhängigkeit von der Bedienung eines Touchscreens realisiert werden kann, um ein als unangenehm empfundene Anströmen der Hand während des Bedienens des Touchscreens zu vermeiden. Hierdurch ist es ermöglicht, den Touchscreen auch oberhalb von Luftauslassöffnungen der Klimatisierungseinrichtung anzuordnen.

## Patentansprüche

1. Verfahren zum Steuern einer Klimatisierungseinrichtung (24, 26, 28) in einem Kraftfahrzeug (10), wobei die Klimatisierungseinrichtung (24, 26, 28) durch zumindest eine Luftauslassöffnung (34, 36), die an einer Unterseite (22) eines zum Bedienen zumindest eines Geräts (I) des Kraftfahrzeugs (10) ausgelegten Bedienelements (20) angeordnet ist, einen Luftstrom (30, 32) in einen Fahrzeuginnenraum (12) des Kraftfahrzeugs (10) fördert, wobei
eine Detektionseinrichtung (50) ermittelt und durch ein Detektionssignal (D) signalisiert, ob eine Hand (38) eines Benutzers zum Betätigen des Bedienelements (20) auf das Bedienelement (20) zubewegt wird und/oder ob das Bedienelement (20) betätigt wird,
**dadurch gekennzeichnet, dass**
die Detektionseinrichtung (50) das Detektionssignal (D) in Abhängigkeit von einem Erkennungssignal einer Gestenerkennungseinrichtung (G) erzeugt, welche das Erkennungssignal (E) nur erzeugt, falls eine extrapolierte Bewegungstrajektorie (44) der Hand (38) auf das Bedienelement (20) ausgerichtet ist, und dass
die Klimatisierungseinrichtung (26, 26, 28) den Luftstrom (30, 32) in Abhängigkeit von dem Detektionssignal (D) verringert und/oder umlenkt.

2. Verfahren nach Anspruch 1, wobei die Detektionseinrichtung (50) das Detektionssignal (D) in Abhängigkeit von einem Bediensignal (S) des Bedienelements (20) erzeugt.

3. Verfahren nach einem der vorhergehenden Ansprüche, wobei die Detektionseinrichtung (50) das Detektionssignal (D) in Abhängigkeit von einer von dem Bedienelement (20) verschiedenen zusätzlichen Sensorik (56) erzeugt.

4. Verfahren nach Anspruch 3, wobei die zusätzliche Sensorik (56) zumindest einen der folgenden Sensoren umfasst: eine Videokamera (56), eine Infrarotkamera (56), eine ToF-Kamera (56), einen kapazitiven Sensor.

5. Verfahren nach einem der vorhergehenden Ansprüche, wobei die Detektionseinrichtung (50) das Detektionssignal (D) in Abhängigkeit von Sensorsignalen (S) mehrerer Sensoren erzeugt und hierbei zu jedem Sensorsignal (S) einen Wahrscheinlichkeitswert ermittelt, dass eine Bedienung des Bedienelements (20) bevorsteht, und aus allen Wahrscheinlichkeitswerten einen Gesamtwahrscheinlichkeitswert bildet und Detektionssignal (D) nur erzeugt, falls der Gesamtwahrscheinlichkeitswert ein vorbestimmtes Auslösekriterium erfüllt.

6. Verfahren nach einem der vorhergehenden Ansprüche, wobei während eine zum Einstellen des Luftstroms (30, 32) vorgesehene und an der zumindest einen Luftauslassöffnung (24, 26) angeordnete Einstellvorrichtung (34, 36) der Klimatisierungseinrichtung bedient wird, der Luftstrom (30, 32) unabhängig von einer Position der Hand (38) und einer Bedienung des Bedienelements (20) und nur in Abhängigkeit von der Bedienung der Einstellvorrichtung (34, 36) eingestellt wird.

7. Verfahren nach einem der vorhergehenden Ansprüche, wobei das Detektionssignal (D) nur erzeugt wird, falls sich die Hand (38) oberhalb einer bestimmten Mindesthöhe (60) befindet, wobei sich die zumindest eine Luftauslassöffnung (34, 36) unterhalb der Mindesthöhe (60) befindet.

8. Verfahren nach einem der vorhergehenden Ansprüche, wobei das Bedienelement (20) ein Touchscreen (20) ist und die Klimatisierungseinrichtung (24, 26, 28) den Luftstrom (30, 32) in Abhängigkeit von einem Berührungsort (42) eines Fingers (40) der Hand (38) auf dem Touchscreen (20) nur soweit verändert, dass ein unterhalb des Berührungsortes (42) strömender Anteil (32) des Luftstroms (30, 32) verringert wird und ein übriger Anteil (30) des Luftstroms (30, 32) unverändert bleibt.

9. Kraftfahrzeug (10) mit einem zum Bedienen zumindest eines Geräts (I) des Kraftfahrzeugs (10) ausgelegten Bedienelement (20) und einer Klimatisierungseinrichtung (24, 26, 28), die zumindest eine an einer Unterseite (22) des Bedienelements (20) angeordnete Luftauslassöffnung (24, 26) zum Einblasen eines Luftstroms (30, 32) in einen Fahrzeuginnenraum (12) des Kraftfahrzeugs (10) aufweist, **gekennzeichnet durch**
eine Detektionseinrichtung (50), die dazu ausgelegt ist, zu überwachen, ob ein Benutzer seine Hand (38) zum Betätigen des Bedienelements (20) auf das Bedienelement (20) zubewegt und/oder ob der Benutzer das Bedienelement (20) betätigt, und dies gegebenenfalls durch ein Detektionssignal (D) zu signalisieren, wobei die Klimatisierungseinrichtung (24, 26, 28) dazu ausgelegt ist, den Luftstrom (30, 32) in Abhängigkeit von dem Detektionssignal (D) zu verringern und/oder umzulenken, wobei das Kraftfahrzeug dazu ausgelegt ist, ein Verfahren nach einem der vorhergehenden Ansprüche durchzuführen.

10. Kraftfahrzeug (10) nach Anspruch 9, wobei das Bedienelement (20) ein Touchscreen (20) ist.

## Claims

1. Method to control an air-conditioning device (24, 26, 28) in a motor vehicle (10), wherein the air-conditioning device (24, 26, 28) facilitates an air flow (30, 32) in a vehicle interior (12) of the motor vehicle (10) through at least one air outlet opening (34, 36) which is arranged on a lower side (22) of an operating element (20) designed to operate at least one appliance (I) of the motor vehicle (10), wherein
a detection device (50) determines and signals via a detection signal (D) whether a hand (38) of a user is moved towards the operating element (20) to actuate the operating element (20) and/or whether the operating element (20) is actuated,
**characterised in that**
the detection device (50) generates the detection signal (D) depending on a recognition signal of a gesture recognition device (G) which generates the recognition signal (E) only if an extrapolated movement trajectory (44) of the hand (38) is aligned with the operating element (20), and
the air-conditioning device (26, 26, 28) reduces and/or deflects the air flow (30, 32) depending on the detection signal (D).

2. Method according to claim 1, wherein the detection device (50) generates the detection signal (D) depending on an operating signal (S) of the operating element (20).

3. Method according to any one of the preceding claims, wherein the detection device (50) generates the detection signal (D) depending on an additional sensor system (56) different to the operating element (20).

4. Method according to claim 3, wherein the additional sensor system (56) comprises at least one of the following sensors: a video camera (56), an infra-red camera (56), a ToF camera (56), a capacitive sensor.

5. Method according to any one of the preceding claims, wherein the detection device (50) generates the detection signal (D) depending on sensor signals (S) of several sensors and herein determines a probability value regarding each sensor signal (S), that an operation of the operating element (20) is pending, and forms a total probability value from all probability values and generates a detection signal (D) only if the total probability value fulfils a predetermined trigger criterion.

6. Method according to any one of the preceding claims, wherein whilst an adjusting device (34, 36) of the air-conditioning device, provided to adjust the air flow (30, 32) and arranged on the at least one air outlet opening (24, 26), is operated, the air flow (30, 32) is adjusted independently of a position of the hand (38) and of an operation of the operating element (20) and only depending on the operation of the adjusting device (34, 36).

7. Method according to any one of the preceding claims, wherein the detection signal (D) is generated only if the hand (38) is located above a determined minimum height (60), wherein the at least one air outlet opening (34, 36) is located below the minimum height (60).

8. Method according to any one of the preceding claims, wherein the operating element (20) is a touch screen (20) and the air-conditioning device (24, 26, 28) changes the air flow (30, 32) depending on a contact location (42) of a finger (40) of the hand (38) on the touch screen (20) only insofar as a proportion (32) of the air flow (30, 32) flowing below the contact location (42) is reduced and a remaining proportion (30) of the air flow (30, 32) remains unchanged.

9. Motor vehicle (10) having an operating element (20) designed to operate at least one appliance (I) of the motor vehicle (10) and an air-conditioning device (24, 26, 28) which has at least one air outlet opening (24, 26) arranged on a lower side (22) of the operating element (20) to blow an air flow (30, 32) into a vehicle interior (12) of the motor vehicle (10),
**characterised by**
a detection device (50) which is designed to monitor whether a user moves his hand (38) towards the operating element (20) to actuate the operating element (20) and/or whether the user actuates the operating element (20), and to signal this if necessary via a detection signal (D), wherein the air-conditioning device (24, 26, 28) is designed to reduce and/or to deflect the air flow (30, 32) depending on the detection signal (D), wherein the motor vehicle is designed to implement a method according to any one of the preceding claims.

10. Motor vehicle (10) according to claim 9, wherein the operating element (20) is a touch screen (20).

## Revendications

1. Procédé de commande d'un dispositif de climatisation (24, 26, 28) dans un véhicule automobile (10),
dans lequel le dispositif de climatisation (24, 26, 28) transporte un flux d'air (30, 32) dans un habitacle de véhicule (12) du véhicule automobile (10) en passant par au moins un orifice de sortie d'air (34, 36) qui est agencé au niveau d'un dessous (22) d'un élément de commande (20) conçu pour commander au moins un appareil (I) du véhicule automobile (10),
dans lequel un dispositif de détection (50) détermine et signale par un signal de détection (D) si une main (38) d'un utilisateur est déplacée vers l'élément de commande (20) en vue de l'actionnement de l'élément de commande (20) et/ou si l'élément de commande (20) est actionné,
**caractérisé en ce que**
le dispositif de détection (50) produit le signal de détection (D) en fonction d'un signal de reconnaissance d'un dispositif de reconnaissance de gestes (G) qui ne produit le signal de reconnaissance (E) que si une trajectoire de mouvement extrapolée (44) de la main (38) est dirigée vers l'élément de commande (20) et **en ce que**
le dispositif de climatisation (26, 26, 28) réduit et/ou dévie le flux d'air (30, 32) en fonction du signal de détection (D).

2. Procédé selon la revendication 1, dans lequel le dispositif de détection (50) produit le signal de détection (D) en fonction d'un signal de commande (S) de l'élément de commande (20).

3. Procédé selon l'une quelconque des revendications précédentes, dans lequel le dispositif de détection (50) produit le signal de détection (D) en fonction d'un système capteur (56) supplémentaire différent de l'élément de commande (20).

4. Procédé selon la revendication 3, dans lequel le système capteur (56) supplémentaire comprend au moins l'un des capteurs suivants : une caméra vidéo (56), une caméra infrarouge (56), une caméra temps-de-vol (56), un capteur capacitif.

5. Procédé selon l'une quelconque des revendications précédentes, dans lequel le dispositif de détection (50) produit le signal de détection (D) en fonction de signaux de capteurs (S) de plusieurs capteurs et détermine alors pour chaque signal de capteur (S) une valeur de probabilité qu'une commande de l'élément de commande (20) soit imminente et il forme à partir de toutes les valeurs de probabilité une valeur de probabilité globale et ne produit un signal de détection (D) que si la valeur de probabilité globale satisfait un critère de déclenchement prédéterminé.

6. Procédé selon l'une quelconque des revendications précédentes, dans lequel, pendant qu'un dispositif de réglage (34, 36), prévu pour régler le flux d'air (30, 32) et agencé au niveau de l'au moins un orifice de sortie d'air (24, 26), du dispositif de climatisation est commandé, le flux d'air (30, 32) est réglé indépendamment d'une position de la main (38) et d'une commande de l'élément de commande (20) et seulement en fonction de la commande du dispositif de réglage (34, 36).

7. Procédé selon l'une quelconque des revendications précédentes, dans lequel le signal de détection (D) n'est produit que si la main (38) se trouve au-dessus d'une certaine hauteur minimale (60), l'au moins un orifice de sortie d'air (34, 36) se trouvant alors au-dessous de la hauteur minimale (60).

8. Procédé selon l'une quelconque des revendications précédentes, dans lequel l'élément de commande (20) est un écran tactile (20) et le dispositif de climatisation (24, 26, 28) ne modifie le flux d'air (30, 32) en fonction d'un point de contact (42) d'un doigt (40) de la main (38) sur l'écran tactile (20) que dans la mesure où une partie (32), s'écoulant sous le point de contact (42), du flux d'air (30, 32) est réduite et une partie restante (30) du flux d'air (30, 32) reste inchangée.

9. Véhicule automobile (10) avec un élément de commande (20) conçu pour commander au moins un appareil (I) du véhicule automobile (10) et avec un dispositif de climatisation (24, 26, 28) qui comporte au moins un orifice de sortie d'air (24, 26), agencé au niveau d'un dessous (22) de l'élément de commande (20) et destiné à souffler un flux d'air (30, 32) dans un habitacle de véhicule (12) du véhicule automobile (10),
**caractérisé par** un dispositif de détection (50) qui est conçu pour surveiller si un utilisateur déplace sa main (38) vers l'élément de commande (20) en vue de l'actionnement de l'élément de commande (20) et/ou si l'utilisateur actionne l'élément de commande (20) et pour signaler le cas échéant ce fait par un signal de détection (D),
dans lequel le dispositif de climatisation (24, 26, 28) est conçu pour réduire et/ou dévier le flux d'air (30, 32) en fonction du signal de détection (D),
dans lequel le véhicule automobile est conçu pour mettre en oeuvre un procédé selon l'une quelconque des revendications précédentes.

10. Véhicule automobile (10) selon la revendication 9, dans lequel l'élément de commande (20) est un écran tactile (20).
